# EUROPÄISCHE PATENTANMELDUNG

(11) **EP 2 806 669 A1**
(43) Veröffentlichungstag der Anmeldung: **26.11.2014**
(21) Anmeldenummer: 14167623.9
(22) Anmeldetag: 09.05.2014
(51) Int. Cl.: H04W 4/18

(54) **Verschobene Übertragung von Daten zur Entlastung der Luftschnittstelle**

(30) Priorität: 23.05.2013 DE 102013008733
(71) Anmelder: Deutsche Telekom AG, 53113 Bonn (DE)
(72) Erfinder: Blicker, Stephan, 53343 Wachtberg (DE)
(74) Vertreter: Schwöbel, Thilo K.

(57) **Zusammenfassung**

Es wird ein Verfahren zur Übertragung von inhaltebezogenen Daten eines OTT-Anbieters (Over-the-top-Anbieter) an ein Telekommunikationsgerät unter Nutzung eines Telekommunikationsnetzes, wobei die inhaltebezogenen Daten über eine Funkschnittstelle des Telekommunikationsnetzes und eine weitere Funkschnittstelle des Telekommunikationsgeräts übertragen werden, wobei das Telekommunikationsnetz eine Inhalteauslieferungsschnittstelleneinrichtung zur Anbindung des OTT-Anbieters aufweist, wobei das Telekommunikationsnetz eine Inhalteauslieferungsfunktionalität zur Übertragung der inhaltebezogenen Daten über die Funkschnittstelle und die weitere Funkschnittstelle an das Telekommunikationsgerät aufweist, wobei das Telekommunikationsnetz ferner eine Inhaltesteuerungsfunktionalität aufweist, wobei das Verfahren die folgenden Verfahrensschritte aufweist:
-- in einem ersten Verfahrensschritt empfängt der OTT-Anbieter eine Anfrage für inhaltebezogene Daten,
-- in einem dem ersten Verfahrensschritt nachfolgenden zweiten Verfahrensschritt werden die inhaltebezogenen Daten des OTT-Anbieters an die Inhalteauslieferungsschnittstelleneinrichtung des Telekommunikationsnetzes übertragen,
-- in einem dem zweiten Verfahrensschritt nachfolgenden dritten Verfahrensschritt werden die im zweiten Verfahrensschritt an die Inhalteauslieferungsschnittstelleneinrichtung übertragenen inhaltebezogenen Daten an die Inhalteauslieferungsfunktionalität des Telekommunikationsnetzes und von der Inhalteauslieferungsfunktionalität des Telekommunikationsnetzes an das Telekommunikationsgerät übertragen.

## Beschreibung

### Stand der Technik

Die Erfindung betrifft ein Verfahren zur Übertragung von inhaltebezogenen Daten eines OTT-Anbieters (Over-the-top-Anbieter) an ein Telekommunikationsgerät unter Nutzung eines Telekommunikationsnetzes, wobei die inhaltebezogenen Daten über eine Funkschnittstelle des Telekommunikationsnetzes und eine weitere Funkschnittstelle des Telekommunikationsgeräts übertragen werden.

Ferner betrifft die Erfindung ein System, umfassend ein Telekommunikationsendgerät, einen OTT-Anbieter und ein Telekommunikationsnetz, zur Übertragung von inhaltebezogenen Daten des OTT-Anbieters an das Telekommunikationsgerät unter Nutzung des Telekommunikationsnetzes, wobei das Telekommunikationsnetz eine Funkschnittstelle aufweist, wobei das Telekommunikationsgerät ein weitere Funkschnittstelle aufweist, wobei das Telekommunikationsnetz und das Telekommunikationsgerät zur Übertragung der inhaltebezogenen Daten über die Funkschnittstelle und die weitere Funkschnittstelle vorgesehen sind.

Weiterhin betrifft die Erfindung auch ein Telekommunikationsnetz zur Übertragung von inhaltebezogenen Daten eines OTT-Anbieters an ein Telekommunikationsgerät.

Heutige Mobilfunknetze der dritten und vierten Generation werden bereits heute und vermutlich noch vermehrt in Zukunft dem Endkunden teilweise oder vollständig als Festnetzersatz angeboten, d.h. es befindet sich -typischerweise in der Wohnung oder im Haus des Kunden - ein Zugangseinrichtung (auch als Access Device bezeichnet), etwa eine Routereinrichtung, zur Versorgung von lokal drahtlos und/oder drahtgebunden angeschlossener Geräte wie Musikgeräte, Videogeräte, etc., wobei die Zugangseinrichtung entweder nur noch teilweise oder aber gar nicht über eine Festnetzverbindung (typischerweise basierend auf einer DSL-Verbindung; Digital Subscriber Line) mit einem Telekommunikationsnetz verbunden ist, sondern über eine Mobilfunkverbindung. Die teilweise Anbindung der Zugangseinrichtung über eine Festnetzverbindung bedeutet, dass die Festnetzverbindung vorhanden ist und zusätzlich noch eine Mobilfunkanbindung der Zugangseinrichtung besteht, so dass über potentiell und je nach Situation über lediglich einen dieser Anbindungskanäle oder über beide dieser Kanäle Datenaustausch möglich ist (sogenannter "Hybrid Access", bei dem beispielsweise die Anbindung via DSL und via LTE kombiniert angeboten werden). Es ist daher damit zu rechnen, dass die sowohl die Mobilfunktransportnetze als auch die Luftschnittstelle der Mobilfunknetze mehr und mehr mit hohen Datenvolumina-Aufkommen zu rechnen haben. Damit sind hohe Investitionskosten seitens der Mobilfunkbetreiber verbunden.

Sogenannte OTT Provider (Over-the-top-Anbieter) bieten schon heute zur Verteilung über das DSL-Netz vorgesehene Internet-Inhalte bzw. inhaltebezogene Daten (mit großen Datenvolumina) an, die der Kunde sich zahlungspflichtig herunterladen kann. In Mobilfunknetzen der Zukunft (insbesondere Mobilfunknetzen der dritten oder vierten Generation, wie beispielsweise LTE; Long Time Evolution) wird der Kunde, der sich für die 3G- oder LTE-Technik als teilweisen oder vollständigen Festnetzersatz entscheidet, aufgrund der hohen Datenaufkommen für diese inhaltebezogenen Daten (insbesondere beim Download) mit Einschränkungen hinsichtlich seines Tarifs zu rechnen haben, beispielsweise dadurch, dass die zur Verfügung stehende Übertragungsbandbreite reduziert (etwa nach dem Verbrauch eines gewissen Datenvolumens in einer bestimmten Zeiteinheit) wird, was auch als "speed step down" bezeichnet wird. Dies stellt sowohl eine Einschränkung des OTT-Anbieters als auch des Endkunden dar.

Es ist aus der Druckschrift WO 2011/009578 A1 ein Verfahren für eine vergrößerte Kommunikationseffizienz bekannt, wobei die Kommunikation auf der Luftschnittstelle zwischen einer Basisstation des Mobilfunknetzes und einem mobilen Gerät dadurch modifiziert wird, dass eine Steuerungsnachricht von der Basisstation zum mobilen Gerät übertragen wird, wobei die Steuerungsnachricht eine Modifikationsinformation umfasst, wobei die Modifikationsinformation auf geänderte Übertragungsbedingungen innerhalb eines bestimmten Zeitintervalls - insbesondere zur Übertragung von Nicht-Echtzeitdaten - hinweist.

Die Übertragung der Daten über die Luftschnittstelle des Mobilfunkkommunikationsnetzes bzw. des Telekommunikationsnetzes ist hierbei jedoch von der Reaktion der mobilen Geräte bzw. Telekommunikationsendgeräte bzw. Telekommunikationsgeräte abhängig. Das bedeutet, dass Situationen auftreten können, in denen eine bevorzugte Übertragungsmöglichkeit seitens des Telekommunikationsnetzes bzw. des Mobilfunkkommunikationsnetzes kommuniziert wird, diese jedoch nicht in Anspruch genommen wird, was letztlich zu einer momentan geringeren und damit ungleichmäßigeren - und somit also ungünstigeren - Auslastung des Telekommunikationsnetzes führt.

### Offenbarung der Erfindung

Der Erfindung liegt die Aufgabe zugrunde, ein Verfahren zur Übertragung von inhaltebezogenen Daten eines OTT-Anbieters an ein Telekommunikationsgerät über eine Funkschnittstelle vorzuschlagen, welches mit geringem Aufwand und möglichst geringer Beeinträchtigung des Nutzers eine Optimierung der Auslastung des Telekommunikationsnetzes - insbesondere der Auslastung von rein internen oder im Wesentlichen internen Kommunikationswegen des Telekommunikationsnetzes und/oder der Auslastung der Funkschnittstelle des Telekommunikationsnetzes - ermöglicht.

Diese Aufgabe wird erfindungsgemäß gelöst durch ein Verfahren zur Übertragung von inhaltebezogenen Daten eines OTT-Anbieters (Over-the-top-Anbieter) an ein Telekommunikationsgerät unter Nutzung eines Telekommunikationsnetzes, wobei die inhaltebezogenen Daten über eine Funkschnittstelle des Telekommunikationsnetzes und eine weitere Funkschnittstelle des Telekommunikationsgeräts übertragen werden, wobei das Telekommunikationsnetz eine Inhalteauslieferungsschnittstelleneinrichtung zur Anbindung des OTT-Anbieters aufweist, wobei das Telekommunikationsnetz eine Inhalteauslieferungsfunktionalität zur Übertragung der inhaltebezogenen Daten über die Funkschnittstelle und die weitere Funkschnittstelle an das Telekommunikationsgerät aufweist, wobei das Verfahren die folgenden Verfahrensschritte aufweist:
-- in einem ersten Verfahrensschritt empfängt der OTT-Anbieter eine Anfrage für inhaltebezogene Daten,
-- in einem dem ersten Verfahrensschritt nachfolgenden zweiten Verfahrensschritt werden die inhaltebezogenen Daten des OTT-Anbieters an die Inhalteauslieferungsschnittstelleneinrichtung des Telekommunikationsnetzes übertragen,
-- in einem dem zweiten Verfahrensschritt nachfolgenden dritten Verfahrensschritt werden die im zweiten Verfahrensschritt an die Inhalteauslieferungsschnittstelleneinrichtung übertragenen inhaltebezogenen Daten an die Inhalteauslieferungsfunktionalität des Telekommunikationsnetzes übertragen und von der Inhalteauslieferungsfunktionalität des Telekommunikationsnetzes zu einem vorgegeben Zeitpunkt oder in einem vorgegebenen Zeitintervall an das Telekommunikationsgerät übertragen.

Mittels eines solchen erfindungsgemäßen Verfahrens zur netzschonenden Auslieferung von Inhalten mit hohen Datenvolumen - insbesondere inhaltebezogenen Daten - wird die vorhandene Kapazität der Luftschnittstelle und/oder von rein internen oder im Wesentlichen internen Kommunikationswegen des Telekommunikationsnetzes zur verkehrsarmen Zeit besser bzw. effizienter genutzt, so dass die inhaltebezogenen Daten insbesondere exakt zu dieser Zeit ausgeliefert werden können.

Erfindungsgemäß ist es damit in vorteilhafter Weise möglich, dass die Kosten der Einspeisung der inhaltebezogenen Daten des OTT-Anbieters für den Netzbetreiber des Telekommunikationsnetzes relativ gering sind, weil die Zusatzbelastung des Telekommunikationsnetzes (wegen typischerweise der Übertragung der inhaltebezogenen Daten während der verkehrsarmen Zeit, nämlich zum vorgegebenen Zeitpunkt oder in einem vorgegebenen Zeitintervall) trotz des möglicherweise erheblichen Datenvolumens der inhaltebezogenen Daten vergleichsweise gering ist bzw. die Übertragung der inhaltebezogenen Daten des OTT-Anbieters keine Zusatzkapazität des Telekommunikationsnetzes erfordert. Es sind hierdurch insbesondere sehr flexible und/oder sehr günstige Preisszenarien denkbar, beispielsweise "Zahlen nach Verbrauch" ("pay per use") und/oder ein monatlicher und/oder volumenabhängiger Preis für die Übertragung der (vom OTT-Anbieter bereitgestellten) inhaltebezogenen Daten an das Telekommunikationsgerät. Ferner ist es denkbar, dass im Rahmen solcher flexibler und/oder günstiger Preisszenarien für die Übertragung der inhaltebezogenen Daten für die Auslieferung der der inhaltebezogenen Daten auf Tarifeinschränkungen (wie z.B. speed step down), insbesondere gegenüber dem Endkunden, verzichtet wird. Dadurch ist die mit dieser Einschränkung - dass die inhaltebezogenen Daten zum (vom Telekommunikationsnetz bzw. vom Betreiber des Telekommunikationsnetzes) vorgegebenen Zeitpunkt bzw. dem vorgegebenen Zeitintervall zum Telekommunikationsgerät übertragen werden - verbundene Übertragung der inhaltebezogenen Daten für den Kunden des Telekommunikationsnetzes bzw. des OTT-Anbieters vergleichsweise kostengünstig durchführbar. Der Endkunde kann den Inhalt nicht in allen Fällen sofort benutzen (insbesondere einen Videoinhalt sehen / bzw. einen Softwareinhalt anwenden), sondern erst nach Auslieferung durch den Netzbetreiber zum vorgegebenen Zeitpunkt bzw. im vorgegebenen Zeitintervall, typischerweise in der verkehrsarmen Zeit. Für die Mehrzahl von "Nicht-Echtzeitdaten" bzw. Nicht-EchtzeitAnwendungen ist dies jedoch unkritisch.

Der vorgegebene Zeitpunkt bzw. das vorgegebene Zeitintervall zur Übertragung der inhaltebezogenen Daten von der Inhalteauslieferungsfunktionalität an das Telekommunikationsgerät ist erfindungsgemäß
-- gemäß einer Variante beispielsweise fest definiert (beispielsweise für einen ersten OTT-Anbieter - etwa im Bereich einer Funkzelle des Mobilfunkkommunikationsnetzes bzw. im Bereich mehrerer Funkzellen des Mobilfunkkommunikationsnetzes bzw. des Telekommunikationsnetzes - von 01:00 Uhr nachts bis 01:30 Uhr nachts, für einen zweiten OTT-Anbieter von 01:30 Uhr nachts bis 02:00 Uhr nachts, etc.)
-- oder aber gemäß einer weiteren Variante variabel definiert, d.h. der vorgegebene Zeitpunkt bzw. das vorgegebene Zeitintervall wird der Inhalteauslieferungsschnittstelleneinrichtung und/oder der Inhalteauslieferungsfunktionalität beispielsweise mittels einer Information übermittelt.

Beispielsweise entspricht das vorgegebene Zeitintervall der Durchführung des dritten Verfahrensschritts ca. 300 Sekunden oder ca. 600 Sekunden oder ca. 1200 Sekunden oder ca. 1800 Sekunden oder ca. 45 Minuten oder ca. 60 Minuten oder ca. 120 Minuten oder ca. 180 Minuten. Alternativ zu einer vorgegebenen sukzessiven Übertragung der inhaltebezogenen Daten von verschiedenen OTT-Anbietern oder aber für verschiedene Telekommunikationsgeräte (innerhalb einer Funkzelle bzw. innerhalb eines geographischen Bereichs mit konkurrierender Benutzung der Funkressourcen des Telekommunikationsnetzes) kann es erfindungsgemäß auch vorgesehen sein, dass unterschiedliche Zeitschlitze für die unterschiedlichen inhaltebezogenen Daten (von den verschiedenen OTT-Anbietern und/oder für die verschiedenen Telekommunikationsgeräte) vorgesehen sind, wobei sich die Zeitschlitze gemäß einem vorgegebenen bzw. vorbestimmten Muster wiederholen.

Erfindungsgemäß handelt es sich bei den inhaltebezogenen Daten insbesondere um Nicht-Echtzeitdaten, d.h. solche Daten, die nicht zwingend innerhalb einer besonders kurzen Übertragungszeit zu übertragen sind. Beispiele hierfür sind etwa E-Mail-Nachrichten (oder Nachrichten sonstiger Art wie etwa MMS-Nachrichten, Multimedia Message System-Nachrichten, etc.), Nicht-Echtzeit-Videodaten, beispielsweise solche für VOD-Anwendungen (Video-on-Demand-Anwendungen) oder auch Software-Daten, d.h. Daten, mittels der Software-Elemente (von einzelnen Software-Modulen bis zu ganzen Programmen bzw. Betriebssystemen oder dergleichen) übertragen werden. Dagegen beziehen sich Echtzeitdaten auf solche Kommunikationszusammenhänge, bei denen eine sehr schnelle Übertragung deshalb erforderlich ist, weil eine im Wesentlichen unmittelbare Reaktion eines Kommunikationspartners erforderlich ist, etwa bei der Übermittlung von Telefongesprächen, von Videotelefongesprächen oder auch bei der Übermittlung von Internetanwendungsbezogenen Daten, etwa Echtzeitdaten für eine verkehrsbezogene und/oder routingbezogene Internetanwendung eines Nutzers des Telekommunikationsgeräts.

Bei dem Telekommunikationsgerät handelt es sich erfindungsgemäß (und für sämtliche Ausführungsvarianten der Erfindung und sowohl für das erfindungsgemäße Verfahren als auch für das erfindungsgemäße System, das erfindungsgemäße Telekommunikationsnetz bzw. das erfindungsgemäße Telekommunikationsgerät) beispielsweise um ein festinstalliertes (d.h. um ein "nicht mobiles" bzw. typischerweise nicht regelmäßig bewegtes) Gerät oder aber auch um ein ("mobiles") Telekommunikationsendgerät, etwa ein Telefon oder ein tragbarer Computer. Im Falle eines festinstallierten Telekommunikationsgeräts handelt es sich beispielsweise um ein Zugangsgerät zur Bereitstellung einer Internetkonektivität etwa in einer Wohnung oder in einem Haus oder auch um eine sogenannte Settopbox mit Internetkonnektivität, etwa zum direkten oder indirekten Anschluss an ein Fernsehgerät oder sonstiges Wiedergabegerät für audiovisuelle Daten oder Multimediadaten.

Erfindungsgemäß ist es - entsprechend der bereits angesprochenen weiteren Variante - besonders bevorzugt vorgesehen, dass eine Information
-- über den vorgegebenen Zeitpunkt des Beginns der Durchführung des dritten Verfahrensschritts und/oder
-- über das vorgegebene Zeitintervall der Durchführung des dritten Verfahrensschritts an die Inhalteauslieferungsschnittstelleneinrichtung und/oder an die Inhalteauslieferungsfunktionalität übermittelt wird.

Es ist hierdurch erfindungsgemäß vorteilhaft möglich, dass die Inhalteauslieferung von der Inhalteauslieferungsschnittstelleneinrichtung an die Inhalteauslieferungsfunktionalität und weiter an das Telekommunikationsgerät gesteuert erfolgt; insbesondere ist es erfindungsgemäß möglich, dass eine benutzerindividuelle Information und/oder eine OTT-Anbieter-individuelle Information über den vorgegebenen Zeitpunkt des Beginns der Durchführung des dritten Verfahrensschritts und/oder über das vorgegebene Zeitintervall der Durchführung des dritten Verfahrensschritts an die Inhalteauslieferungsschnittstelleneinrichtung übermittelt wird, so dass die Übertragung der inhaltebezogenen Daten an die Inhalteauslieferungsfunktionalität und weiter an das Telekommunikationsgerät unter effizienter Nutzung der Ressourcen des Telekommunikationsnetzes und weiterhin insbesondere unter zeitnaher (in Bezug etwa auf den Bestellzeitpunkt) Übertragung und möglichst zeitkompakter (in Bezug auf das zur Übertragung der inhaltebezogenen Daten genutzte Zeitintervall) Übertragung der inhaltebezogenen Daten an das Telekommunikationsgerät erfolgen kann.

Ohne die Übermittlung einer Information über den vorgegebenen Zeitpunkt des Beginns der Durchführung des dritten Verfahrensschritts und/oder über das vorgegebene Zeitintervall der Durchführung des dritten Verfahrensschritts an die Inhalteauslieferungsschnittstelleneinrichtung - entsprechend der oben erwähnten (ersten) Variante - kann es gemäß einer alternativen Ausführungsform des erfindungsgemäßen Verfahrens bzw. gemäß einer alternativen Ausführungsform des erfindungsgemäßen Systems bzw. des erfindungsgemäßen Telekommunikationsnetzes bzw. Telekommunikationsgeräts auch vorgesehen sein, dass beispielsweise fest vorgegebene Zeitpunkt und/oder Zeitintervalle während der verkehrsarmen Zeiträume (typischerweise während der Nacht) für die Übertragung der inhaltebezogenen Daten vorgesehen sind, beispielsweise für einen ersten OTT-Anbieter (im Bereich einer Funkzelle des Mobilfunkkommunikationsnetzes bzw. im Bereich mehrerer Funkzellen des Mobilfunkkommunikationsnetzes bzw. des Telekommunikationsnetzes) von 01:00 Uhr nachts bis 01:30 Uhr nachts, für einen zweiten OTT-Anbieter von 01:30 Uhr nachts bis 02:00 Uhr nachts, etc.

Erfindungsgemäß ist es ferner bevorzugt vorgesehen, dass das Telekommunikationsnetz eine Inhaltesteuerungsfunktionalität aufweist, wobei die Information über den vorgegebenen Zeitpunkt oder das vorgegebene Zeitintervall der Inhalteauslieferungsschnittstelleneinrichtung von der Inhaltesteuerungsfunktionalität übermittelt wird.

Hierdurch ist es erfindungsgemäß in vorteilhafter Weise möglich, dass eine zentrale Instanz innerhalb des Telekommunikationsnetzes in effizienter Weise die Steuerung der Übertragung der inhaltebezogenen Daten übernimmt, so dass der normale Betrieb des Telekommunikationsnetzes für Echtzeitanwendungen, d.h. insbesondere Sprachtelefonieanwendungen, Videotelefonieanwendungen und/oder Echtzeit- oder Nahechtzeit-Internetanwendungen (Near-Realtime-Applications) nicht oder zumindest nicht wesentlich beeinträchtigt wird.

Besonders bevorzugt ist es gemäß der vorliegenden Erfindung ferner, dass das Telekommunikationsnetz ein Netzwerkmonitoringsystem aufweist, wobei der vorgegebene Zeitpunkt oder das vorgegebene Zeitintervall in Abhängigkeit von durch das Netzwerkmonitoringsystem der Inhaltesteuerungsfunktionalität übermittelter Informationen, insbesondere über die momentane Auslastung wenigstens eines Teils des Telekommunikationsnetzes, erfolgt.

Hierdurch ist es erfindungsgemäß in vorteilhafter Weise vorgesehen, dass die von der Inhaltesteuerungsfunktionalität der Inhalteauslieferungsschnittstelleneinrichtung übermittelte Information bezüglich des vorgegebenen Zeitpunkts und/oder des vorgegebenen Zeitintervalls der Durchführung des dritten Verfahrensschrittes an die momentane Auslastungssituation des Telekommunikationsnetzes angepasst ist.

Erfindungsgemäß ist ferner auch bevorzugt, dass die inhaltebezogenen Daten Nicht-Echtzeitdaten sind, wobei das Telekommunikationsgerät zum Empfang der inhaltebezogenen Daten zum vorgegebenen Zeitpunkt oder während des vorgegebenen Zeitintervalls entweder aktiviert ist oder zuvor aktiviert wird, insbesondere durch das Telekommunikationsnetz und automatisiert aktiviert wird.

Hierdurch ist es in vorteilhafter Weise realisierbar, dass das Telekommunikationsgerät zum vorgegebenen Zeitpunkt und/oder im vorgegebenen Zeitintervall auch zum Empfang der inhaltebezogenen Daten in der Lage ist, d.h. entsprechend empfangsbereit bzw. aktiviert ist (d.h. sich insbesondere nicht in einem Energiesparmodus mit reduzierter Empfangsbereitschaft befindet).

Ferner ist es erfindungsgemäß bevorzugt vorgesehen, dass die während des ersten Verfahrensschritts an den OTT-Anbieter übertragene Anfrage für inhaltebezogene Daten vom Telekommunikationsgerät zum OTT-Anbieter übermittelt wird.

Hierdurch ist es erfindungsgemäß besonders einfach möglich, die inhaltebezogenen Daten mittels des Telekommunikationsgerät zu definieren.

Erfindungsgemäß ist es weiterhin auch bevorzugt vorgesehen, dass in einem ersten Teilschritt des dritten Verfahrensschritts die inhaltebezogenen Daten von der Inhalteauslieferungsschnittstelleneinrichtung an die Inhalteauslieferungsfunktionalität übertragen werden und in einem dem ersten Teilschritt nachfolgenden zweiten Teilschritt des dritten Verfahrensschrittes von der Inhalteauslieferungsfunktionalität des Telekommunikationsnetzes an das Telekommunikationsgerät übertragen werden.

Erfindungsgemäß ist es weiterhin bevorzugt, dass die inhaltebezogenen Daten von der Inhalteauslieferungsfunktionalität nach dem Empfang von der Inhalteauslieferungsschnittstelleneinrichtung zwischengespeichert werden.

Hierdurch ist es erfindungsgemäß vorteilhaft möglich, eine höhere Flexibilität bei der Übertragung der inhaltebezogenen Daten zu erreichen und ferner eine Entkopplung der Übertragung zwischen der Inhalteauslieferungsschnittstelleneinrichtung und der Inhalteauslieferungsfunktionalität einerseits und der Übertragung zwischen der Inhalteauslieferungsfunktionalität und dem Telekommunikationsgerät andererseits zu erreichen. Die Inhalteauslieferungsfunktionalität ist erfindungsgemäß auf die Zustellung der inhaltebezogenen Daten über das Mobilfunknetz bzw. den Mobilfunknetzteil des Telekommunikationsnetzes optimiert und ist insbesondere in der Lage den zu übertragenden Inhalt bzw. die inhaltebezogenen Daten und die Übertragungsparameter zu modifizieren und ist der zentrale Anlaufpunkt für das Telekommunikationsgerät (bzw. den sog. client), insbesondere über eine zuvor vereinbarte bzw. definierte Internet Protokoll-Adresse oder auch über eine auflösbare DNS-Adresse (Domain-Name-System-Adresse). Ferner ist es durch die Zwischenspeicherung der inhaltebezogenen Daten in der Inhalteauslieferungsfunktionalität auch möglich dass der Inhalt bzw. die inhaltebezogenen Daten mehrfach heruntergeladen werden, ohne dass das Telekommunikationsnetz zwischen der Inhalteauslieferungsschnittstelleneinrichtung und der Inhalteauslieferungsfunktionalität (auch als "IP network backbone" bezeichnet) erneut belastet wird.

Ein weiterer Gegenstand der vorliegenden Erfindung ist ein System, umfassend ein Telekommunikationsendgerät, einen OTT-Anbieter (Over-the-top-Anbieter) und ein Telekommunikationsnetz, zur Übertragung von inhaltebezogenen Daten des OTT-Anbieters an das Telekommunikationsgerät unter Nutzung des Telekommunikationsnetzes, wobei das Telekommunikationsnetz eine Funkschnittstelle aufweist, wobei das Telekommunikationsgerät ein weitere Funkschnittstelle aufweist, wobei das Telekommunikationsnetz und das Telekommunikationsgerät zur Übertragung der inhaltebezogenen Daten über die Funkschnittstelle und die weitere Funkschnittstelle vorgesehen sind, wobei das Telekommunikationsnetz eine Inhalteauslieferungsschnittstelleneinrichtung zur Anbindung des OTT-Anbieters aufweist, wobei das Telekommunikationsnetz eine Inhalteauslieferungsfunktionalität zur Übertragung der inhaltebezogenen Daten über die Funkschnittstelle und die weitere Funkschnittstelle an das Telekommunikationsgerät aufweist, wobei das Telekommunikationsnetz ferner eine Inhaltesteuerungsfunktionalität aufweist, wobei der OTT-Anbieter derart konfiguriert ist, eine Anfrage für inhaltebezogene Daten zu empfangen, wobei der OTT-Anbieter und das Telekommunikationsnetz derart konfiguriert sind, dass die inhaltebezogenen Daten des OTT-Anbieters in Abhängigkiet der Anfrage für inhaltebezogene Daten an die Inhalteauslieferungsschnittstelleneinrichtung des Telekommunikationsnetzes übertragen werden, wobei das Telekommunikationsnetz derart konfiguriert ist, dass an die Inhalteauslieferungsschnittstelleneinrichtung übertragene inhaltebezogene Daten an die Inhalteauslieferungsfunktionalität des Telekommunikationsnetzes übertragen werden und von der Inhalteauslieferungsfunktionalität des Telekommunikationsnetzes zu einem vorgegebenen Zeitpunkt oder in einem vorgegebenen Zeitintervall an das Telekommunikationsgerät übertragen werden.

Mit einem solchen erfindungsgemäßen System (bzw. einem Telekommunikationsnetz mit einem OTT-Anbieter und einem Telekommunikationsgerät) ist es gegenüber herkömmlichen Telekommunikationsnetzen vorteilhaft möglich, dass auch verkehrsarme Zeiträume zur Übertragung von inhaltebezogenen Daten genutzt werden können, so dass eine optimiertere Kundendienstleistung mit einem vergleichsweise geringen Aufwand realisiert werden kann.

Sämtliche bevorzugten Ausführungsformen, die gemäß des erfindungsgemäßen Verfahrens offenbart wurden, beziehen sich ebenfalls auf das erfindungsgemäße System; insbesondere, dass
-- eine Information über den vorgegebenen Zeitpunkt des Beginns der Durchführung des dritten Verfahrensschritts und/oder über das vorgegebene Zeitintervall der Durchführung des dritten Verfahrensschritts an die Inhalteauslieferungsschnittstelleneinrichtung und/oder an die Inhalteauslieferungsfunktionalität übermittelt wird bzw. das System bzw. das Telekommunikationsnetz entsprechend konfiguriert ist;
-- das Telekommunikationsnetz eine Inhaltesteuerungsfunktionalität aufweist, wobei die Information über den vorgegebenen Zeitpunkt oder das vorgegebene Zeitintervall der Inhalteauslieferungsschnittstelleneinrichtung von der Inhaltesteuerungsfunktionalität übermittelt wird bzw. das Telekommunikationsnetz entsprechend konfiguriert ist;
-- das Telekommunikationsnetz ein Netzwerkmonitoringsystem aufweist, wobei der vorgegebene Zeitpunkt oder das vorgegebene Zeitintervall in Abhängigkeit von durch das Netzwerkmonitoringsystem der Inhaltesteuerungsfunktionalität übermittelter Informationen, insbesondere über die momentane Auslastung wenigstens eines Teils des Telekommunikationsnetzes, erfolgt bzw. das System bzw. das Telekommunikationsnetz entsprechend konfiguriert ist;
-- die inhaltebezogenen Daten Nicht-Echtzeitdaten sind, wobei das Telekommunikationsgerät zum Empfang der inhaltebezogenen Daten zum vorgegebenen Zeitpunkt oder während des vorgegebenen Zeitintervalls entweder aktiviert ist oder zuvor aktiviert wird;
-- die während des ersten Verfahrensschritts an den OTT-Anbieter übertragene Anfrage für inhaltebezogene Daten vom Telekommunikationsgerät zum OTT-Anbieter übermittelt wird;
-- dass die inhaltebezogenen Daten von der Inhalteauslieferungsfunktionalität nach dem Empfang von der Inhalteauslieferungsschnittstelleneinrichtung zwischengespeichert werden bzw. das System bzw. das Telekommunikationsnetz entsprechend konfiguriert ist.

Weiterhin bezieht sich die vorliegende Erfindung auch auf ein Telekommunikationsgerät zur Benutzung in einem erfindungsgemäßen System, wobei das Telekommunikationsgerät derart konfiguriert ist, dass das Telekommunikationsgerät zum Empfang der inhaltebezogenen Daten zum vorgegebenen Zeitpunkt oder zum vorgegebenen Zeitintervall automatisch aktivierbar ist.

Die vorliegende Erfindung bezieht sich weiterhin auch auf ein Telekommunikationsnetz zur Übertragung von inhaltebezogenen Daten eines OTT-Anbieters (Over-the-top-Anbieter) an ein Telekommunikationsgerät, wobei das Telekommunikationsnetz eine Inhalteauslieferungsschnittstelleneinrichtung zur Anbindung des OTT-Anbieters aufweist, wobei das Telekommunikationsnetz eine Inhalteauslieferungsfunktionalität zur Übertragung der inhaltebezogenen Daten über eine Funkschnittstelle des Telekommunikationsnetzes aufweist, wobei das Telekommunikationsnetz ferner eine Inhaltesteuerungsfunktionalität aufweist, wobei das Telekommunikationsnetz derart konfiguriert ist, dass die inhaltebezogenen Daten an der Inhalteauslieferungsschnittstelleneinrichtung des Telekommunikationsnetzes empfangen werden, wobei das Telekommunikationsnetz derart konfiguriert ist, dass an die Inhalteauslieferungsschnittstelleneinrichtung übertragene inhaltebezogene Daten an die Inhalteauslieferungsfunktionalität des Telekommunikationsnetzes übertragen werden und von der Inhalteauslieferungsfunktionalität des Telekommunikationsnetzes zu einem vorgegebenen Zeitpunkt oder in einem vorgegebenen Zeitintervall an die Funkschnittstelle des Telekommunikationsnetzes übertragen werden.

Mit einem solchen erfindungsgemäßen Telekommunikationsnetz ist es gegenüber herkömmlichen Telekommunikationsnetzen vorteilhaft möglich, dass auch verkehrsarme Zeiträume zur Übertragung von inhaltebezogenen Daten genutzt werden können.

Sämtliche bevorzugten Ausführungsformen, die gemäß des erfindungsgemäßen Verfahrens offenbart wurden, beziehen sich ebenfalls auf das erfindungsgemäße Telekommunikationsnetz; insbesondere, dass
-- eine Information über den vorgegebenen Zeitpunkt des Beginns der Durchführung des dritten Verfahrensschritts und/oder über das vorgegebene Zeitintervall der Durchführung des dritten Verfahrensschritts an die Inhalteauslieferungsschnittstelleneinrichtung und/oder an die Inhalteauslieferungsfunktionalität übermittelt wird bzw. das Telekommunikationsnetz entsprechend konfiguriert ist;
-- das Telekommunikationsnetz eine Inhaltesteuerungsfunktionalität aufweist, wobei die Information über den vorgegebenen Zeitpunkt oder das vorgegebene Zeitintervall der Inhalteauslieferungsschnittstelleneinrichtung von der Inhaltesteuerungsfunktionalität übermittelt wird bzw. das Telekommunikationsnetz entsprechend konfiguriert ist;
-- das Telekommunikationsnetz ein Netzwerkmonitoringsystem aufweist, wobei der vorgegebene Zeitpunkt oder das vorgegebene Zeitintervall in Abhängigkeit von durch das Netzwerkmonitoringsystem der Inhaltesteuerungsfunktionalität übermittelter Informationen, insbesondere über die momentane Auslastung wenigstens eines Teils des Telekommunikationsnetzes, erfolgt bzw. das Telekommunikationsnetz entsprechend konfiguriert ist;
-- die inhaltebezogenen Daten Nicht-Echtzeitdaten sind, wobei das Telekommunikationsgerät zum Empfang der inhaltebezogenen Daten zum vorgegebenen Zeitpunkt oder während des vorgegebenen Zeitintervalls entweder aktiviert ist oder zuvor aktiviert wird;
-- die während des ersten Verfahrensschritts an den OTT-Anbieter übertragene Anfrage für inhaltebezogene Daten vom Telekommunikationsgerät zum OTT-Anbieter übermittelt wird;
-- dass die inhaltebezogenen Daten von der Inhalteauslieferungsfunktionalität nach dem Empfang von der Inhalteauslieferungsschnittstelleneinrichtung zwischengespeichert werden bzw. das Telekommunikationsnetz entsprechend konfiguriert ist.

Ferner bezieht sich die vorliegende Erfindung auch auf ein Computerprogramm mit Programmcodemitteln, mit deren Hilfe alle Schritte des erfindungsgemäßen Verfahrens durchführbar sind, wenn das Computerprogramm auf einer Netzeinheit oder einer Mehrzahl von Netzeinheiten eines Telekommunikationsnetzes, einem Computer oder einer entsprechenden Recheneinheit ausgeführt wird.

Weiterhin ist Gegenstand der vorliegenden Erfindung ein Computerprogrammprodukt mit einem computerlesbaren Medium und einem auf dem computerlesbaren Medium gespeicherten Computerprogramm mit Programmcodemitteln, die dazu geeignet sind, dass alle Schritte des erfindungsgemäßen Verfahrens durchführbar sind, wenn das Computerprogramm auf einer Netzeinheit oder einer Mehrzahl von Netzeinheiten eines Telekommunikationsnetzes, einem Computer oder einer entsprechenden Recheneinheit ausgeführt wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

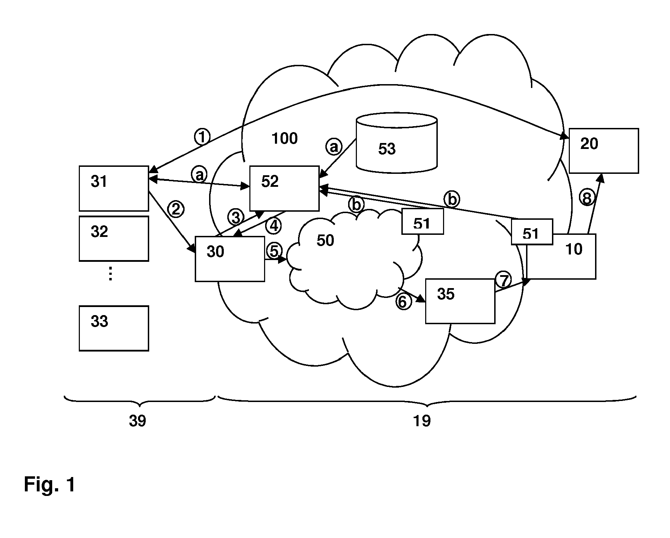

- **Figur 1**: zeigt eine schematische Ansicht eines beispielhaften erfindungsgemäßen Systems umfassend ein erfindungsgemäßes Telekommunikationsnetz, ein erfindungsgemäßes Telekommunikationsgerät und eine Mehrzahl von OTT-Anbietern, wobei das erfindungsgemäße System zur Durchführung des erfindungsgemäßen Verfahrens ausgelegt ist.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

In Figur 1 ist eine schematische Ansicht eines beispielhaften erfindungsgemäßen Systems umfassend ein erfindungsgemäßes Telekommunikationsnetz 100, ein erfindungsgemäßes Telekommunikationsgerät 20 und eine Mehrzahl von OTT-Anbietern (Over-the-top-Anbieter), wobei das erfindungsgemäße System zur Durchführung des erfindungsgemäßen Verfahrens ausgelegt ist. Ein erster OTT-Anbieter ist mit dem Bezugszeichen 31 bezeichnet. Ein zweiter OTT-Anbieter ist mit dem Bezugszeichen 32 bezeichnet. Ein dritter OTT-Anbieter ist mit dem Bezugszeichen 33 bezeichnet.

Das Telekommunikationsnetz 100 - das schematisch in Form einer großen Wolke angedeutet dargestellt ist - weist eine Inhalteauslieferungsschnittstelleneinrichtung 30 (nachfolgend auch als Content Delivery Gateway Function bezeichnet) zur Anbindung der OTT-Anbieter 31, 32, 33 auf. Es ist jedoch der Einfachheit halber lediglich für den ersten OTT-Anbieter 31 die Anbindung an das Telekommunikationsnetz 100 dargestellt; d.h. die Inhalteauslieferungsschnittstelleneinrichtung 30 ist in der Praxis auch mit dem zweiten OTT-Anbieter 32 bzw. dem dritten OTT-Anbieter 33 verbunden. Es ist klar, dass der erste, zweite und dritte OTT-Anbieter 31, 32, 33 für eine beliebige Anzahl von OTT-Anbietern stehen. Die Inhalteauslieferungsschnittstelleneinrichtung 30 dient als Bindeglied zwischen einer ersten Domäne 19 (bzw. "domain") des Telekommunikationsnetzes 100 (bzw. des Betreibers des Telekommunikationsnetzes 100) und einer zweiten Domäne 39 (bzw. "domain") des OTT-Anbieters 31, 32, 33 bzw. der Mehrzahl von OTT-Anbietern 31, 32, 33. Hierbei kann es auch vorgesehen sein, dass eine separate Inhalteauslieferungsschnittstelleneinrichtung pro mit dem Telekommunikationsnetz 100 verbundenem OTT-Anbieter 31, 32, 33 vorhanden ist, was jedoch in Figur 1 nicht dargestellt ist.

Das Telekommunikationsnetz 100 weist ein Rückgrat Netzwerk 50 bzw. ein zentrales Netzwerk 50 auf, welches auch als "Operator Backbone Internet Protokoll network" bezeichnet wird. Das Telekommunikationsnetz 100 weist ferner ein

Das Telekommunikationsnetz 100 weist darüber hinaus auch eine Inhalteauslieferungsfunktionalität 35 auf, die mit einer Basisstation 10 des Telekommunikationsnetzes 100 als Beispiel für eine Vielzahl von Basisstationen bzw. Basisstationseinheiten bzw. Basisstationsentitäten des Telekommunikationsnetzes 100 verbunden ist. Die Inhalteauslieferungsfunktionalität 35 ist über das zentrale Netzwerk 50 mit der Inhalteauslieferungsschnittstelleneinrichtung 30 verbunden. Die Basisstation 10 stellt eine Funkschnittstelle des Telekommunikationsnetzes 100 zur Verfügung, die in Funkkontakt mit einer weiteren Funkschnittstelle des Telekommunikationsgeräts 20 steht. Bei dem Telekommunikationsgerät 20 handelt es sich für sämtliche Ausführungsvarianten der Erfindung und sowohl für das erfindungsgemäße Verfahren als auch für das erfindungsgemäße System, das erfindungsgemäße Telekommunikationsnetz 100 bzw. das erfindungsgemäße Telekommunikationsgerät 20 beispielsweise um ein festinstalliertes Gerät oder aber auch um ein ("mobiles") Telekommunikationsgerät, insbesondere ein Telekommunikationsendgerät, etwa ein Telefon oder ein tragbarer Computer. Im Falle eines festinstallierten Telekommunikationsgeräts 20 handelt es sich beispielsweise um ein Zugangsgerät zur Bereitstellung einer Internetkonektivität oder auch um eine sogenannte Settopbox.

Das Telekommunikationsnetz 100 weist darüberhinaus auch eine Inhaltesteuerungsfunktionalität 52 (nachfolgend auch als Content Policy and Rules Function bezeichnet) auf, wobei die Inhaltesteuerungsfunktionalität 52 die Steuerung der Übermittlung der inhaltebezogenen Daten von der Inhalteauslieferungsschnittstelleneinrichtung 30 zum Telekommunikationsgerät 20 bzw. zur Inhalteauslieferungsfunktionalität 35 durchführt. Insbesondere ist es erfindungsgemäß vorgesehen, dass die Information über den vorgegebenen Zeitpunkt oder das vorgegebene Zeitintervall der Inhalteauslieferungsschnittstelleneinrichtung 30 von der Inhaltesteuerungsfunktionalität 52 übermittelt wird.

Das Telekommunikationsnetz 100 weist ferner auch
-- einen Home Subscriber Server 53 (HSS) bzw. eine Benutzerdatenbank 53, in der Benutzerprofile gespeichert werden bzw. in der Kundenbeziehungsdaten gespeichert werden, insbesondere zur Durchführung einer CRM-Funktionalität (Customer Relationship Management-Funktion); und
-- ein Netzwerkmonitoringsystem 51 auf, wobei das Netzwerkmonitoringsystem 51 zur Erfassung von Informationen über die momentane Auslastung des Telekommunikationsnetz 100 vorgesehen ist, wobei Teilkomponenten des Netzwerkmonitoringsystems 51 (etwa in der Art von Detektoren des Auslastungsgrades der jeweiligen Netzkomponente) typischerweise an verschiedenen Stellen im Telekommunikationsnetz 100 vorgesehen sind - in Figur 1 ist dies beispielhaft als Komponente 51 des Netzwerkmonitoringsystems am zentralen Netzwerk 50 und als Komponente 51 des Netzwerkmonitoringsystems an der Basisstation 10 veranschaulicht - und wobei erfindungsgemäß insbesondere der vorgegebene Zeitpunkt oder das vorgegebene Zeitinterval (zur Übertragung der inhaltebezogenen Daten im dritten Verfahrensschritt) in Abhängigkeit von durch das Netzwerkmonitoringsystem 51 der Inhaltesteuerungsfunktionalität 52 übermittelter Informationen insbesondere durch die Inhaltesteuerungsfunktionalität 52 erfolgt.

Gemäß dem erfindungsgemäßen ist vorgesehen, dass in einem ersten Verfahrensschritt der OTT-Anbieter 31, 32, 33 eine Anfrage für inhaltebezogene Daten - insbesondere seitens des Telekommunikationsgeräts 20 erhält, vgl. die Pfeildarstellung mit dem Bezugszeichen 1 in Figur 1. Diese Anfrage enthält beispielsweise die Information, einen bestimmten Videoinhalt, beispielsweise eine Film, zum Telekommunikationsgerät 20 zu übertragen (insbesondere unter Verwendung eines Datenkompressionsverfahrens wie beispielsweise einer Variante der MPEG-Standards oder dergleichen). In einem dem ersten Verfahrensschritt nachfolgenden zweiten Verfahrensschritt werden die inhaltebezogenen Daten des OTT-Anbieters 31, 32, 33 an die Inhalteauslieferungsschnittstelleneinrichtung 30 des Telekommunikationsnetzes 100 übertragen, vgl. die Pfeildarstellung mit dem Bezugszeichen 2 in Figur 1. In einem dem zweiten Verfahrensschritt nachfolgenden dritten Verfahrensschritt werden die im zweiten Verfahrensschritt an die Inhalteauslieferungsschnittstelleneinrichtung 30 übertragenen inhaltebezogenen Daten an die Inhalteauslieferungsfunktionalität 35 des Telekommunikationsnetzes 100 übertragen (vgl. die Pfeildarstellungen mit den Bezugszeichen 5 und 6 in Figur 1) und von der Inhalteauslieferungsfunktionalität 35 des Telekommunikationsnetzes 100 zu einem vorgegeben Zeitpunkt oder in einem vorgegebenen Zeitintervall an das Telekommunikationsgerät 20 übertragen, vgl. die Pfeildarstellungen mit den Bezugszeichen 7 und 8 in Figur 1. Zur Bestimmung des vorgegebenen Zeitpunkts bzw. des vorgegebenen Zeitintervalls bzw. zur Übermittlung an die Inhalteauslieferungsschnittstelleneinrichtung 30 ist es vorgesehen, dass eine Kommunikation bzw. ein Nachrichtenaustausch zwischen der Inhalteauslieferungsschnittstelleneinrichtung 30 und der Inhaltesteuerungsfunktionalität 52 erfolgt, vgl. die Pfeildarstellungen mit den Bezugszeichen 3 und 4 in Figur 1. Hierbei wird insbesondere von der Inhalteauslieferungsschnittstelleneinrichtung 30 zur Inhaltesteuerungsfunktionalität 52 eine Information über den Umfang und/oder der Dringlichkeit der vom Telekommunikationsgerät 20 angeforderten inhaltebezogenen Daten (vgl. Pfeil 3) übermittelt und es wird die Antwort in Form einer Information des vorgegebenen Zeitpunkts bzw. des vorgegeben Zeitintervalls von der Inhaltesteuerungsfunktionalität 52 an die Inhalteauslieferungsschnittstelleneinrichtung 30 übermittelt (vgl. Pfeil 4).

Erfindungsgemäß ist es insbesondere vorgesehen, dass der Netzbetreiber des Telekommunikationsnetz 100 eine spezielle Vereinbarung mit dem OTT-Anbieter 31, 32, 33 bzw. den OTT-Anbietern 31, 32, 33 hat, insbesondere über die Rahmenbedingungen der Auslieferung der inhaltebezogenen Daten. Der Kunde bzw. Endkunde hat einen speziellen Client (etwa eine spezielle Anwendungssoftware bzw. eine sogenannte App auf sein mobiles oder nichtmobiles Telekommunikationsgerät 20 (bzw. Settopbox oder Routereinrichtung oder Laptop oder dergleichen) geladen. Der spezielle Client auf dem Telekommunikationsgerät 20 (und damit das Telekommunikationsgerät 20) ist in der Lage, auch in den verschiedenen Betriebszuständen mit reduziertem Energieverbrauch (sogenannte standby Modi) angesprochen zu werden bzw. einen Befehl zu einer Verbindungsaufnahme zu einem bestimmten Zeitpunkt zu verwalten und durchzuführen. Der Kunde bzw. Endkunde ist dafür verantwortlich, dass der spezielle Client auch auf dem Telekommunikationsgerät 20 läuft und wird insbesondere (etwa über die Anwendung bzw. den Client) über den voraussichtlichen Ladezeitpunkt beim Kauf des Inhaltes bzw. der inhaltebezogenen Daten in Kenntnis gesetzt. Der Kunde fordert den Inhalt bzw. die inhaltebezogenen Daten vom OTT-Anbieter 31, 32, 33 an. Über die (in Figur 1 mit einer Pfeildarstellung und dem Bezugszeichen a bezeichneten) Schnittstellen ist sichergestellt, dass sowohl der Operator bzw. Betreiber des Telekommunikationsnetzes 100 als auch der OTT-Anbieter 31, 32, 33 die jeweiligen Kundenbeziehungen kennen und auch die nötigen Identifikationsinformationen dafür bekannt sind (beispielsweise die MSISDN, ein Benutzername bzw. ein Passwort (Username/Password match), etc.). Auch kann während des Kaufes der inhaltebezogenen Daten der voraussichtliche Lieferungstermin / Downloadtermin dem Kunden bzw. Endkunden mitgeteilt werden.

Der OTT-Anbieter 31, 32, 33 liefert den Content, d.h. die inhaltebezogenen Daten, an die Inhalteauslieferungsschnittstelleneinrichtung 30 (bzw. CDGWF; Content Delivery Gateway Function), vgl. Pfeildarstellung 2 in Figur 1. Die Inhalteauslieferungsschnittstelleneinrichtung 30 dient als Eingangsknoten für den OTT-Anbieter 31, 32, 33 für seine Inhalte (inhaltebezogene Daten) und ist in der Lage, Inhalte zwischenzuspeichern und zu einem späteren Zeitpunkt über das Operator IP Backbone NW 50 (bzw. zentrales Netzwerk 50) zu übertragen.

Die Inhalteauslieferungsschnittstelleneinrichtung 30 fragt bei der Inhaltesteuerungsfunktionalität 52 (Content Policy and Rules Function, CPRF) an, wann der Inhalt über das Backbone zu übertragen ist, vgl. Pfeildarstellung 3 in Figur 1. Den Zeitpunkt errechnet die Inhaltesteuerungsfunktionalität 52 (bzw. CPRF) mit Hilfe von kontinuierlich übertragenen Informationen des Netzwerkmonitoringsystem 51 (bzw. Network Monitoring Systems) des IP Backbones 50 sowie des mobilen Netzes (bzw. der Basisstation 10 als Repräsentant des mobilen Zugangsnetzes), vgl. die Pfeildarstellungen mit Bezugszeichen b in Figur 1, welche Auslastungsinformationen bezüglich der jeweiligen Netzkomponente andeuten sollen. Außerdem fragt die Inhalteauslieferungsschnittstelleneinrichtung 30 (bzw. die CDGWF) an, ob der Kunde (bzw. das Telekommunikationsgerät 20) einen gültigen Partnering Tarif mit dem Inhalte-Anbieter bzw. OTT-Anbieter 31, 32, 33 hat, d.h. die Berechtigung hat, inhaltebezogene Daten übertragen zu erhalten.

Die Inhaltesteuerungsfunktionalität 52 (bzw. CPRF) teilt der Inhalteauslieferungsschnittstelleneinrichtung 30 (bzw. CDGWF) den Auslieferungstermin, d.h. den vorgegebenen Zeitpunkt bzw. das vorgegebene Zeitintervall zur Auslieferung bzw. Übertragung der inhaltebezogenen Daten an das Telekommunikationsgerät 20, mit, vgl. Pfeildarstellung 4 in Figur 1.

Die Inhalteauslieferungsschnittstelleneinrichtung 30 (bzw. CDGWF) liefert zum Termin den Inhalt zum Inhalteauslieferungsfunktionalität 35 (bzw. Operator Content Delivery Network Function CDNF), vgl. Pfeildarstellungen 5 und 6 in Figur 1. Hier werden die inhaltebezogenen Daten auch zwischengespeichert. Die erneute Zwischenspeicherung erhöht die Flexibilität und die Entkopplung zwischen Übertragung über das Backbone (zentrales Netzwerk 50) und Übertragung über das Mobilfunknetz. Die Inhalteauslieferungsfunktionalität 35 (bzw. CDNF) ist auf die Zustellung über das Mobilfunknetz optimiert, kann den Inhalt und die Übertragungsparameter modifizieren und ist der zentrale Anlaufpunkt für den client (über eine vorher vereinbarte IP oder auflösbare DNS Adresse), d.h. die auf dem Telekommunikationsgerät 20 installierte Anwendung. Auch kann der Inhalt bzw. die inhaltebezogenen Daten mehrfach heruntergeladen werden, ohne dass das IP NW backbone 50 erneut belastet wird.

## Patentansprüche

1. Verfahren zur Übertragung von inhaltebezogenen Daten eines OTT-Anbieters (Over-the-top-Anbieter) (31, 32, 33) an ein Telekommunikationsgerät (20) unter Nutzung eines Telekommunikationsnetzes (100), wobei die inhaltebezogenen Daten über eine Funkschnittstelle des Telekommunikationsnetzes (100) und eine weitere Funkschnittstelle des Telekommunikationsgeräts (20) übertragen werden, wobei das Telekommunikationsnetz (100) eine Inhalteauslieferungsschnittstelleneinrichtung (30) zur Anbindung des OTT-Anbieters (31, 32, 33) aufweist, wobei das Telekommunikationsnetz (100) eine Inhalteauslieferungsfunktionalität (35) zur Übertragung der inhaltebezogenen Daten über die Funkschnittstelle und die weitere Funkschnittstelle an das Telekommunikationsgerät (20) aufweist, wobei das Verfahren die folgenden Verfahrensschritte aufweist:
-- in einem ersten Verfahrensschritt empfängt der OTT-Anbieter (31, 32, 33) eine Anfrage für inhaltebezogene Daten,
-- in einem dem ersten Verfahrensschritt nachfolgenden zweiten Verfahrensschritt werden die inhaltebezogenen Daten des OTT-Anbieters (31, 32, 33) an die Inhalteauslieferungsschnittstelleneinrichtung (30) des Telekommunikationsnetzes (100) übertragen,
-- in einem dem zweiten Verfahrensschritt nachfolgenden dritten Verfahrensschritt werden die im zweiten Verfahrensschritt an die Inhalteauslieferungsschnittstelleneinrichtung (30) übertragenen inhaltebezogenen Daten an die Inhalteauslieferungsfunktionalität (35) des Telekommunikationsnetzes (100) übertragen und von der Inhalteauslieferungsfunktionalität (35) des Telekommunikationsnetzes (100) zu einem vorgegeben Zeitpunkt oder in einem vorgegebenen Zeitintervall an das Telekommunikationsgerät (20) übertragen.

2. Verfahren nach Anspruch 1, **dadurch gekennzeichnet, dass** eine Information
-- über den vorgegebenen Zeitpunkt des Beginns der Durchführung des dritten Verfahrensschritts und/oder
-- über das vorgegebene Zeitintervall der Durchführung des dritten Verfahrensschritts
an die Inhalteauslieferungsschnittstelleneinrichtung (30) und/oder an die Inhalteauslieferungsfunktionalität (35) übermittelt wird.

3. Verfahren nach einem der vorhergehenden Ansprüche, **dadurch gekennzeichnet, dass** das Telekommunikationsnetz (100) eine Inhaltesteuerungsfunktionalität (52) aufweist, wobei die Information über den vorgegebenen Zeitpunkt oder das vorgegebene Zeitintervall der Inhalteauslieferungsschnittstelleneinrichtung (30) von der Inhaltesteuerungsfunktionalität (52) übermittelt wird.

4. Verfahren nach einem der vorhergehenden Ansprüche, **dadurch gekennzeichnet, dass** das Telekommunikationsnetz (100) ein Netzwerkmonitoringsystem (51) aufweist, wobei der vorgegebene Zeitpunkt oder das vorgegebene Zeitinterval in Abhängigkeit von durch das Netzwerkmonitoringsystem (51) der Inhaltesteuerungsfunktionalität (52) übermittelter Informationen, insbesondere über die momentane Auslastung wenigstens eines Teils des Telekommunikationsnetzes (100), erfolgt.

5. Verfahren nach einem der vorhergehenden Ansprüche, **dadurch gekennzeichnet, dass** die inhaltebezogenen Daten Nicht-Echtzeitdaten sind, wobei das Telekommunikationsgerät (20) zum Empfang der inhaltebezogenen Daten zum vorgegebenen Zeitpunkt oder während des vorgegebenen Zeitintervalls entweder aktiviert ist oder zuvor aktiviert wird.

6. Verfahren nach einem der vorhergehenden Ansprüche, **dadurch gekennzeichnet, dass** die während des ersten Verfahrensschritts an den OTT-Anbieter (31, 32, 33) übertragene Anfrage für inhaltebezogene Daten vom Telekommunikationsgerät (20) zum OTT-Anbieter (31, 32, 33) übermittelt wird.

7. Verfahren nach einem der vorhergehenden Ansprüche, **dadurch gekennzeichnet, dass** in einem ersten Teilschritt des dritten Verfahrensschritts die inhaltebezogenen Daten von der Inhalteauslieferungsschnittstelleneinrichtung (30) an die Inhalteauslieferungsfunktionalität (35) übertragen werden und in einem dem ersten Teilschritt nachfolgenden zweiten Teilschritt des dritten Verfahrensschrittes von der Inhalteauslieferungsfunktionalität (35) des Telekommunikationsnetzes (100) an das Telekommunikationsgerät (20) übertragen werden.

8. Verfahren nach einem der vorhergehenden Ansprüche, **dadurch gekennzeichnet, dass** die inhaltebezogenen Daten von der Inhalteauslieferungsfunktionalität (35) nach dem Empfang von der Inhalteauslieferungsschnittstelleneinrichtung (30) zwischengespeichert werden.

9. System, umfassend ein Telekommunikationsendgerät (20), einen OTT-Anbieter (Over-the-top-Anbieter) (31, 32, 33) und ein Telekommunikationsnetz (100), zur Übertragung von inhaltebezogenen Daten des OTT-Anbieters (31, 32, 33) an das Telekommunikationsgerät (20) unter Nutzung des Telekommunikationsnetzes (100), wobei das Telekommunikationsnetz (100) eine Funkschnittstelle aufweist, wobei das Telekommunikationsgerät (20) ein weitere Funkschnittstelle aufweist, wobei das Telekommunikationsnetz (100) und das Telekommunikationsgerät (20) zur Übertragung der inhaltebezogenen Daten über die Funkschnittstelle und die weitere Funkschnittstelle vorgesehen sind, wobei das Telekommunikationsnetz (100) eine Inhalteauslieferungsschnittstelleneinrichtung (30) zur Anbindung des OTT-Anbieters (31, 32, 33) aufweist, wobei das Telekommunikationsnetz (100) eine Inhalteauslieferungsfunktionalität (35) zur Übertragung der inhaltebezogenen Daten über die Funkschnittstelle und die weitere Funkschnittstelle an das Telekommunikationsgerät (20) aufweist, wobei das Telekommunikationsnetz (100) ferner eine Inhaltesteuerungsfunktionalität (52) aufweist, wobei der OTT-Anbieter (31, 32, 33) derart konfiguriert ist, eine Anfrage für inhaltebezogene Daten zu empfangen, wobei der OTT-Anbieter (31, 32, 33) und das Telekommunikationsnetz (100) derart konfiguriert sind, dass die inhaltebezogenen Daten des OTT-Anbieters (31, 32, 33) in Abhängigkiet der Anfrage für inhaltebezogene Daten an die Inhalteauslieferungsschnittstelleneinrichtung (30) des Telekommunikationsnetzes (100) übertragen werden, wobei das Telekommunikationsnetz (100) derart konfiguriert ist, dass an die Inhalteauslieferungsschnittstelleneinrichtung (30) übertragene inhaltebezogene Daten an die Inhalteauslieferungsfunktionalität (35) des Telekommunikationsnetzes (100) übertragen werden und von der Inhalteauslieferungsfunktionalität (35) des Telekommunikationsnetzes (100) zu einem vorgegebenen Zeitpunkt oder in einem vorgegebenen Zeitintervall an das Telekommunikationsgerät (20) übertragen werden.

10. Telekommunikationsgerät (20) zur Benutzung in einem System nach Anspruch 9, wobei das Telekommunikationsgerät (20) derart konfiguriert ist, dass das Telekommunikationsgerät (20) zum Empfang der inhaltebezogenen Daten zum vorgegebenen Zeitpunkt oder zum vorgegebenen Zeitintervall automatisch aktivierbar ist.

11. Telekommunikationsnetz (100) zur Übertragung von inhaltebezogenen Daten eines OTT-Anbieters (Over-the-top-Anbieter) (31, 32, 33) an ein Telekommunikationsgerät (20), wobei das Telekommunikationsnetz (100) eine Inhalteauslieferungsschnittstelleneinrichtung (30) zur Anbindung des OTT-Anbieters (31, 32, 33) aufweist, wobei das Telekommunikationsnetz (100) eine Inhalteauslieferungsfunktionalität (35) zur Übertragung der inhaltebezogenen Daten über eine Funkschnittstelle des Telekommunikationsnetzes (100) aufweist, wobei das Telekommunikationsnetz (100) ferner eine Inhaltesteuerungsfunktionalität (52) aufweist, wobei das Telekommunikationsnetz (100) derart konfiguriert ist, dass die inhaltebezogenen Daten an der Inhalteauslieferungsschnittstelleneinrichtung (30) des Telekommunikationsnetzes (100) empfangen werden, wobei das Telekommunikationsnetz (100) derart konfiguriert ist, dass an die Inhalteauslieferungsschnittstelleneinrichtung (30) übertragene inhaltebezogene Daten an die Inhalteauslieferungsfunktionalität (35) des Telekommunikationsnetzes (100) übertragen werden und von der Inhalteauslieferungsfunktionalität (35) des Telekommunikationsnetzes (100) zu einem vorgegebenen Zeitpunkt oder in einem vorgegebenen Zeitintervall an die Funkschnittstelle des Telekommunikationsnetzes (100) übertragen werden.

12. Computerprogramm mit Programmcodemitteln, mit deren Hilfe alle Schritte eines Verfahrens nach einem der Ansprüche 1 bis 8 durchführbar sind, wenn das Computerprogramm auf einer Netzeinheit oder einer Mehrzahl von Netzeinheiten eines Telekommunikationsnetzes (100), einem Computer oder einer entsprechenden Recheneinheit ausgeführt wird.

13. Computerprogrammprodukt mit einem computerlesbaren Medium und einem auf dem computerlesbaren Medium gespeicherten Computerprogramm mit Programmcodemitteln, die dazu geeignet sind, dass alle Schritte eines Verfahrens nach einem der Ansprüche 1 bis 8 durchführbar sind, wenn das Computerprogramm auf einer Netzeinheit oder einer Mehrzahl von Netzeinheiten eines Telekommunikationsnetzes (100), einem Computer oder einer entsprechenden Recheneinheit ausgeführt wird.
